Europäisches Patentamt

European Patent Office

Office européen des brevets

(11) Publication number: 0 294 036
A2

# (12) EUROPEAN PATENT APPLICATION

(21) Application number: 88304148.5

(22) Date of filing: 06.05.88

(51) Int. Cl.⁴: **B01D 53/04** , **B65D 88/74**

The title of the invention has been amended (Guidelines for Examination in the EPO, A-III, 7.3).

(30) Priority: 07.05.87 GB 8710829

(43) Date of publication of application:
**07.12.88 Bulletin 88/49**

(84) Designated Contracting States:
**BE DE ES FR GB IT NL**

(71) Applicant: **The BOC Group plc**
**Chertsey Road**
**Windlesham Surrey GU20 6HJ(GB)**

(72) Inventor: **Garrett, Michael Ernest**
**92 York Road**
**Woking§Surrey(GB)**

(74) Representative: **Wickham, Michael et al**
**c/o Patent and Trademark Department The**
**BOC Group plc Chertsey Road**
**Windlesham Surrey GU20 6HJ(GB)**

(54) Conditioning of the atmosphere over perishable goods.

(57) A transport vehicle 74 has a storage compartment 72. An apparatus for the separation of a gas mixture by pressure swing adsorption has a pipeline 2 communicating with the atmosphere outside the compartment 72 and with an inlet to compressor 4 forming part of the apparatus. The inlet of the compressor 4 also communicates with a conduit 3 which has an inlet in communication with the interior of the compartment 72. The apparatus also includes columns 10 and 12 each containing a bed of carbon molecular sieve which adsorbs oxygen, carbon dioxide and hydrocarbons more readily than nitrogen. In operation, the apparatus provides nitrogen enriched air to the storage compartment 72 via a conduit 30 to form a circulating atmosphere that helps to preserve perishable produce stored therein.

EP 0 294 036 A2

## FIG.2

Xerox Copy Centre

## TRANSPORT OF PERISHABLE GOODS

This invention relates to the storage and transport of perishable goods, in particular harvested fruit, vegetables and cut flowers.

It has been proposed to transport such goods under a protective atmosphere consisting essentially of nitrogen. The atmosphere may also contain a few per cent by volume of oxygen and some carbon dioxide. It has further been proposed to fit a vehicle for transporting such produce with a nitrogen generator of the kind that separates air by pressure swing adsorption. In this proposal, all the air admitted to the nitrogen generator is supplied from outside the perishable goods storage compartment of the vehicle. This proposal has two main disadvantages. First, there will be a tendency for gases (particularly ethylene), evolved by the produce to linger in the container and accelerate deterioration of the goods. Second, there is a tendency for the atmosphere in the storage compartment to stagnate. It is an aim of the present invention to provide a method and apparatus that overcomes or ameliorates this problem.

According to the present invention there is provided a method of storing perishable produce or goods in a storage container, including the step of withdrawing atmosphere from the storage container, mixing it with air, separating from the gas mixture a gaseous product whose nitrogen content is greater than that of the mixture, and returning said nitrogen product to the storage container to create a storage atmosphere comprising nitrogen-enriched air.

The invention also provides a container for the storage of perishable produce or goods, having associated therewith apparatus for separating nitrogen from a gas mixture comprising air and atmosphere withdrawn from said container, a first inlet for said atmosphere to said apparatus, a second inlet for air to said apparatus, and an outlet for nitrogen product from the apparatus, said outlet communicating with the interior of the storage container.

Preferably, the storage container is releasably mountable in an aircraft, on a sea-going vessel or on a wheeled or other vehicle to enable the perishable produce to be transported from one chosen location to another.

Preferably, the gas mixture is separated by pressure swing adsorption or by membranes. If pressure swing adsorption is chosen as the means of separating the gas mixture, a molecular sieve adsorbent is desirably chosen of a kind that in use adsorbs oxygen, carbon dioxide and hydrocarbons more readily than nitrogen. Carbon molecular sieve fulfils this requirement. Accordingly, gases such as ethylene evolved by the produce during storage are removed by the adsorbent and thus it is possible to maintain in the storage container an atmosphere which keeps to a minimum ageing of the produce. Analogously, if a membrane separator is employed, membranes of a kind which are more permeable to oxygen, carbon dioxide and hydrocarbons than to nitrogen are preferably selected.

The gas separation apparatus may be located within the storage container itself (but having one inlet and one exhaust in communication with the outside atmosphere) or is alternatively located outside the container.

Typically, any compressor or vacuum pump forming part of the separation apparatus is powered pneumatically (e.g from its own compressed air supply) hydraulically or electrically, typically by means of a tapping from an electrical power supply associated with a transport vehicle on which the apparatus is mounted.

Preferably, the pressure swing adsorption cycle operates with an adsorption step at elevated pressure and desorption step at atmospheric pressure. Accordingly, the product gas is produced at elevated pressure. If desired, the exhaust gas may be passed through a heat exchange coil in heat exchange relationship with the atmosphere in the storage container so as to provide some cooling for this atmosphere.

The position of the inlet leading from the storage container to the gas separation plant and the outlet from the gas separation plant to the container may be such as to promote the circulation of gas within the container.

The invention will now be described by way of example with reference to the accompanying drawings, in which :

Figure 1 is a schematic diagram illustrating a gas separation plant for use in the invention; and

Figure 2 and 3 are respectively a schematic, partly cut-away, plan view, partly in section, and a side view, of a tranport vehicle incorporating the plant shown in Figure 1.

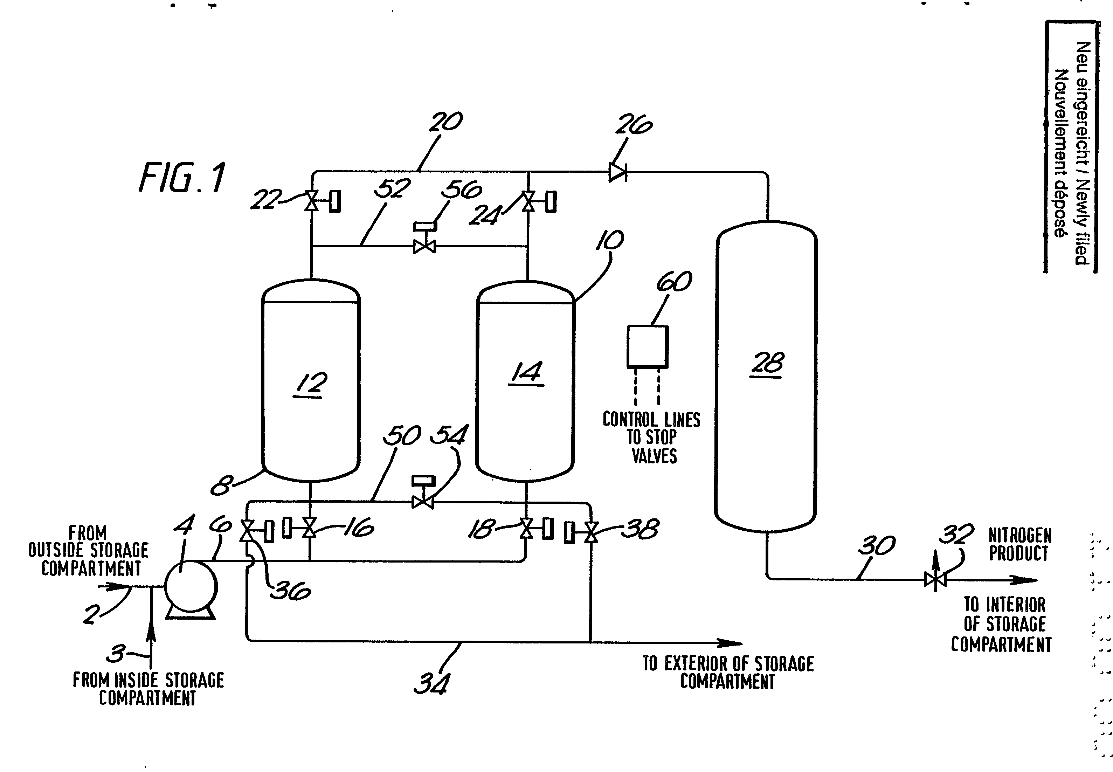

Referring to Figure 1 of the drawings there is shown a gas separation plant for use in the method and apparatus according to the invention. The illustrated plant includes an air feed pipeline 2 leading to a compressor 4. An atmosphere intake pipe 3 has one end able to be placed in communication with the storage compartment (not shown in Figure 1) of a transport vehicle and its other end terminating in the pipeline 2. The outlet of the compressor 4 communicates with an inlet conduit 6. The inlet conduit 6 is able to be placed in communication with either one of columns 8 and 10 containing beds 12 and 14 respectively of carbon molecular sieve adsorbent. The columns 8 and 10 are substantially identical to one another, as are the beds 12 and 14. A stop valve 16 (also referred to herein as an on-off valve) is operable to place the bottom of the bed 12 in communication with the inlet conduit 6 or to deny communication between the bed 12 and the inlet conduit 6. Analogously, a stop valve 18 is operable to place the bottom of the bed 14 in communication with the inlet conduit 6 or to deny such communication.

The plant shown in Figure 1 is provided with an outlet conduit 20 terminating in a reservoir 28. A stop valve 22 is operable to place the top of the bed 12 in communication with the reservoir 28 via the conduit 20 or to prevent such communication. Analogously, a stop valve 24 is operable to place the top of the bed 14 in communication with the reservoir 28 via the conduit 20 or to deny such communication. The reservoir 28 typically has a larger volume than either the bed 12 or the bed 14. In the conduit 20 there is disposed a non-return valve 26 which is adapted to be open only when the pressure upstream of it exceeds the downstream pressure (i.e. the pressure in reservoir 28). The reservoir 28 has an outlet communicating with a pipeline 30 for product gas. In the pipeline 30 is disposed a flow control valve 32 which can be operated to withdraw nitrogen product from the reservoir 28 at a chosen rate.

There is also an outlet conduit 34 for waste or desorbed gas. The outlet conduit 34 exhausts gas to outside the storage compartment of the transport vehicle. A stop valve 36 is operable to place the bottom of the bed 12 in communication with the atmosphere via the conduit 34 or to deny such communication. A similar stop valve 38 is operable to place the bottom of the bed 14 in communication with the atmosphere via the conduit 34 or to deny such communication. There is also a conduit 50 which when open places the bottom of the bed 12 in communication with the bottom of the bed 14. A similar conduit 52 places the top of the bed 12 in communication with the top of the bed 14. A stop valve 54 is disposed in the conduit 50 and when closed denies communication between the two beds, a similar stop valve 56 being located in the conduit 52.

The valves 16, 18, 22, 24, 36, 38, 54 and 56 are all automatically operated in a manner well known in the art and the timing of the opening and closing of these valves may be dictated by a programmable valve controller 60.

In operation, at the start of a cycle, the bed 12 is at atmospheric pressure and the bed 14 is at its maximum pressure being in communication with the compressor 4. The cycle starts with the beds 12 and 14 being placed in communication with one another through the conduits 50 and 52. In this phase of the cycle, valves 16, 18, 22, 24, 36 and 38 are all in their closed positions and valves 54 and 56 are open. Since the pressure in bed 14 is greater than that in the bed 12, unadsorbed nitrogen-enriched gas in the spaces between individual particles of adsorbent in the bed 14 flows through conduits 50 and 52 into the bed 12. During this first phase of the cycle, and all others nitrogen product is continuously withdrawn from the reservoir 28 through the outlet pipeline 30. There will typically be fluctuations in the pressure in the reservoir 28, but the reservoir 28 is preferably sized such that such fluctuations in delivery pressure are relatively small and such that the average delivery pressure is in the order of or a little below the maximum pressure that obtains during the cycle in the vessels 8 and 10. For example, the pressure in the reservoir 28 may range between 7 and 8 atmospheres absolute and the compressor 4 may typically have an outlet of 8 atmospheres absolute.

After a period of time of a few seconds selected to be sufficient for the pressure in the bed 12 have equalised or nearly equalised with the pressure in the bed 14, the next phase of the operating cycle starts. Thus, the controller 60 generates signals to close valves 54 and 56 and to open valves 16, 22 and 38. Accordingly, a mixture of atmosphere taken from the storage compartment air is fed into the bed 12 from the compressor 4 and the pressure in the bed 12 is gradually increased and reaches the value of the pressure in the reservoir 28. During this period oxygen is adsorbed by the carbon molecular sieve to leave in the vessel 8 an unadsorbed gas mixture enriched in nitorgen. It will be appreciated that during the previous pressure equalisation step unadsorbed nitrogen-enriched gas has been supplied from the vessel 14 to the vessel 12. In addition, the flow of product quality gas from the reservoir 28 to the top of the bed 12 which takes place whenever there is a pressure difference therebetween helps to ensure that the first gas delivered to the reservoir 28 during the adsorption phase of the bed 12 is of satisfactory purity. This first delivery takes place once the pressure in the bed 12 exceeds that in the reservoir 28. The non-return valve 26 then permits gas to flow into the reservoir 28. This flow of gas from the bed 12 into the reservoir 28 continues for a chosen period of time. Typically, the bed 12 receives compressed air from the compressor 4 for a period in the order of a minute or so during any one adsorption step. The adsorption step is typically allowed to continue for just so long as the purity of the gas delivered to the reservoir 28 remains acceptable.

During all the period in which the bed 12 is in communication with the compressor 4 the bottom of the bed 14 communicates with the atmosphere through the valve 38. Accordingly, residual unadsorbed gas in the bed 14 is vented and, as the pressure in the vessel 10 drops, so previously adsorbed oxygen is desorbed and this gas is vented as well. By this means, the adsorbent in the bed 14 is regenerated ready for the next adsorption step that it has to perform.

The next step in the operating cycle is to perform another equalisation of the pressure between the beds 12 and 14. The previous phase ends and the pressure phase equalisation is started by the controller 60 generating signals to close the valves 16, 22 and 38 and to open the valves 54 and 56. This pressure equalisation phase of the operating cycle is analogous to the first phase, except that in this instance the flow of nitrogen-rich gas is from the bed 12 to the bed 14. The duration of this pressure equalisation phase is equal to the duration of the first pressure equalisation phase and its end is marked by the valves 54 and 56 being closed by virtue of signals from the controller 60 and the valves 18, 24 and 36 being opened by such signals. The final phase of the operating cycle the commences. This phase is analogous to the second phase (in which the bed 12 is adsorbing and the 14 is being regenerated) except that in this instance it is the bed 14 that adsorbs oxygen from incoming compressed air while the bed 12 is regenerated by being subjected to atmospheric pressures.

At the end of this fourth and final phase of the operating cycle the valves 18 and 24 and 36 are closed by virtue of signals from the controller 60 and the valves 54 and 56 are opened again by such signals so that the cycle can be repeated.

During the entirety of the cycle, nitrogen product is withdrawn at a chosen rate from the reservoir 28 through the outlet 30 and is passed into the storage compartment. The operating cycle of the plant shown in Figure 1 is arranged so that the average rate of intake of atmosphere through conduit 3 equals the average rate of venting gas (to the atmosphere) through the conduit 34. There is thus no net flow into or out of the storage compartment.

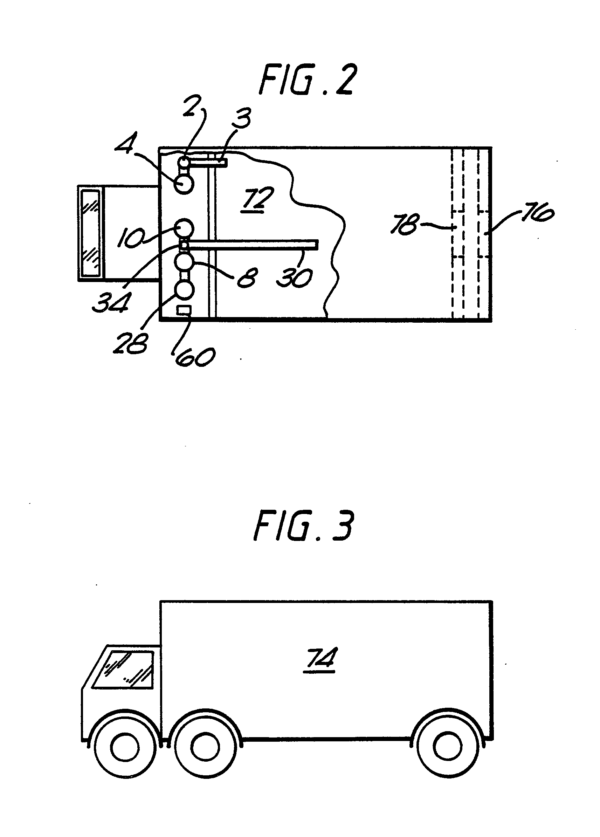

The separation plant shown in Figure 1 may be disposed in a transport vehicle in the manner shown in Figures 2 and 3. The compressor 4, columns 8 and 10, reservoir 28, and controller 60 are disposed along one side of a storage compartment 72 of a wheeled transport vehicle 74. The storage compartment may typically be used to transport fruit or other fresh produce (not shown). The pipeline 2 communicates with the external environment through the roof of compartment 72 so as to keep to a minimum the quantity of vehicle exhaust fumes that are drawn into the plant. The conduit 34 is preferably made of a good thermal conductor to facilitate transfer of heat from the atmosphere in the compartment 72 to the gas being vented and thereby helps refrigerate the atmosphere. The conduit 34 terminates with the environment outside the compartment 72 and extends through the roof of the compartment 72.

The pipeline 30 preferably terminates within the compartment 72 at a region remote from the conduit 3 so as to promote circulation of atmosphere within the compartment 72.

Typically, the compartment 72 has an outer solid door 76, and an inner mesh door 78 to enable access to the interior of the compartment 72 to be gained. There are desirably safety interlocks associated with the controller 60, whereby operation of the compressor 4 cannot take place when the door 76 is open and whereby there is a predetermined time period starting with the opening of the door 76 before it is possible to open the door 78, the time period being sufficient for the oxygen content of the atmosphere in the compartment 72 to be restored to about 20% by volume.

From start-up, the gas separation plant is relatively rapidly able to reduce the oxygen concentration of the atmosphere in the compartment 72 from, say, 20.9% to a chosen value typically in the range 1 to 5% by volume. Any gases such as ethylene that promote ripening and that are evolved by the produce being stored will be included in the gas intake to the adsorbers from the interior of the compartment and will be adsorbed by the molecular sieve. Accordingly, the apparatus according to the invention helps to reduce deterioration of the produce.

## Claims

1. A method of storing perishable produce or goods in a storage container, including the steps of withdrawing atmosphere from the storage container, mixing it with air, separating from the gas mixture a gaseous product whose nitrogen content is greater than that of the mixture, and returning said nitrogen product to the storage container to create a storage atmosphere comprising nitrogen-enriched air.

2. A method as claimed in claim 1, in which, the gas mixture is separated by pressure swing adsorption or by membranes.

3. A method as claimed in claim 1 or claim 2, in which the separation is effected using a molecular sieve adsorbent of a kind that in use adsorbs oxygen, carbon dioxide and hydrocarbons more readily than nitrogen.

4. A method as claimed in claim 3, in which the adsorbent is carbon molecular sieve.

5. A method of storing perishable produce substantially as described herein with reference to Figures 2 and 3 of the accompanying drawings.

6. A container for the storage of perishable produce or goods, having associated therewith apparatus for separating nitrogen from a gas mixture comprising air and atmosphere withdrawn from said container, a first inlet for said atmosphere to said apparatus, a second inlet for air to said apparatus, and an outlet for nitrogen product from the apparatus, said outlet communicating with the interior of the storage container.

7. A container as claimed in claim 6, wherein the container is releasably mountable in an aircraft, on a sea-going vessel or on a wheeled or other vehicle whereby the perishable produce or goods are able to be transported from one chosen location to another.

8. A container as claimed in claim 6 or claim 7, wherein said apparatus comprises means for separating the gas mixture by pressure swing adsorption or by membranes .

9. A container as claimed in claim 8, wherein said means for separating the gas mixture utilises a molecular sieve adsorbent of a kind that in use adsorbs oxygen, carbon dioxide and hydrocarbons more readily than nitrogen.

10. A container as claimed in claim 9, in which the molecular sieve adsorbent is carbon molecular sieve.

11. A container as claimed in any one of claims 6 to 10, wherein the gas separation apparatus is located within the storage container itself (but has one inlet and one exhaust in communication with the outside atmosphere).

12. A container as claimed in any one of claims 6 to 10, wherein the gas separation apparatus is located outside the container.

13. A transport vehicle having a storage container, which is substantially as described herein with reference to Figures 2 and 3 of the accompanying drawings.

FIG.1

Neu eingereicht / Newly filed
Nouvellement déposé

EP 0 294 036 A2

FROM OUTSIDE STORAGE COMPARTMENT

FROM INSIDE STORAGE COMPARTMENT

CONTROL LINES TO STOP VALVES

TO EXTERIOR OF STORAGE COMPARTMENT

NITROGEN PRODUCT

TO INTERIOR OF STORAGE COMPARTMENT

Neu eingereicht / Newly filed
Nouvellement déposé

FIG.2

FIG.3